# EUROPEAN PATENT APPLICATION

(11) **EP 4 783 448 A1**
(43) Date of publication of application: **29.07.2026**
(21) Application number: 26151944.1
(22) Date of filing: 15.01.2026
(51) Int. Cl.: H02P 1/00, H02K 1/00, H02P 29/024

(54) **SHORT-CIRCUIT DETECTION IN BIFILAR ELECTRIC MACHINES BY MEANS OF A SUPERIMPOSED SIGNAL**

(30) Priority: 22.01.2025 GB 202500860
(71) Applicant: Rolls-Royce Deutschland Ltd & Co KG, 15827 Blankenfelde-Mahlow (DE)
(72) Inventor: YIRISAW, Tadele, 15827 Blankenfelde-Mahlow (DE); REEH, Andreas, 15827 Blankenfelde-Mahlow (DE); BIRKMAYER, Wolfram Siegfried, 15827 Blankenfelde-Mahlow (DE)

(57) **Abstract**

An arrangement (1) for an electric machine (2, 2') comprises: a first winding system (WS1) and a second winding system (WS2), wherein at least one electrical conductor (120) of the first winding system (WS1) and at least one electrical conductor (121) of the second winding system (WS2) are at least partially wound around a common winding axis (A) and alternate in a direction of the winding axis (A); an inverter system (13) with a first inverter (134A) for the first winding system (WS1) and a second inverter (134B) for the second winding system (WS2); a control unit (131) configured to provide reference signals (Vref, PWMref) to control the first and second inverters (134A, 134B) to provide an AC voltage to the respective winding system (WS1, WS2), wherein the control unit (131) is further configured to superimpose a carrier signal (Vc, PWMc) to the reference signal (Vref, PWMref) for the first inverter (134A); and a sensor (133) arranged at the second winding system (WS2) for sensing an electrical parameter with the second winding system (WS2), wherein the control unit (131) is further configured to receive sensor signals from the sensor (133) and to detect a fault based on the sensor signals.

## Description

### TECHNICAL FIELD

The present disclosure relates in particular to an arrangement for an electric machine, to an electric machine having such an arrangement, and to an aircraft having such an electric machine.

### BACKGROUND

Such arrangements include an electrical winding system. By applying voltages to the winding system, particularly voltages that vary over time, magnetic fields are generated that may cause a rotation of a rotor.

Especially in multiphase rotating field machines, (e.g., having a permanently excited rotor), it is problematic when a winding short circuit occurs in a coil between turns. In particular in such electric machines, the problem exists that, in the event of such a winding short circuit during intended operation, a large electrical current may be induced, which may result in a thermal destruction of the windings. This is particularly relevant not only, but particularly, in aircrafts in which, e.g., permanently excited rotating-field machines are used.

### SUMMARY AND DESCRIPTION

The object of the present disclosure is to provide an improved arrangement for an electric machine. The scope of the present disclosure is defined solely by the appended claims and is not affected to any degree by the statements within this summary. The present embodiments may obviate one or more of the drawbacks or limitations in the related art.

According to one aspect, an arrangement for an electric machine is provided. The arrangement comprises a first winding system and a second winding system, wherein at least one electrical conductor of the first winding system and at least one electrical conductor of the second winding system are at least partially wound around a common winding axis that alternate between winding systems in a direction of the winding axis. The arrangement further comprises an inverter system with a first inverter for the first winding system and electrically connected to the first winding system, and a second inverter for the second winding system and electrically connected to the second winding system. The arrangement further comprises a control unit. The control unit is configured to provide reference signals to control the first and second inverters to provide a respective AC voltage to the respective winding system, wherein the control unit is further configured to superimpose a carrier signal to the reference signal for the first inverter. Thereby, the carrier signal is injected into the first winding system. The arrangement further comprises a sensor arranged at the second winding system for sensing an electrical parameter of the second winding system. The control unit is also configured to receive sensor signals indicative for the sensed electrical parameter of the second winding system from the sensor and to detect a fault based on the received sensor signals. Alternatively, the carrier signal can be injected using the second inverter and the electrical sensors output of the first winding system can be analyzed.

Such an assembly makes it possible to reliably detect an inter-turn short circuit between adjacent turns of a winding portion, e.g., in order to initiate countermeasures, (e.g., switching off a power supply and/or shutting down an electric machine with the assembly in safe operation in order to avoid dangerous operating states). The carrier signal is transmitted from the first winding system into the second winding system by their electromagnetic coupling. If a turn-to-turn fault occurs within the winding, the impedance, particularly the inductance and resistance, will change. This alteration will result in a noticeable shift in the measured sensor signals (e.g., current or voltage) in the second winding system. This change may serve as a fault signature, allowing for the identification of this stator winding fault. Thus, an improved arrangement for an electric machine is obtained.

The adjacent arrangement of the conductor windings of the first and second winding systems may also be referred to as bifilar arrangement. The electrical conductors of the two winding systems are arranged adjacently in a bifilar manner. The control unit may comprise one or more operatively connected parts that may be located adjacent to one another or displaced with respect to one another. The control unit may be a part of the inverter system. Further, the control unit may at least partially be embodied as software and/or hardware.

For example, the reference signals are voltage set points. Alternatively, the reference signals are PWM signals. In both cases an efficient superposition of the carrier signal. The voltage signals may be provided by a current control that sets a current target by adjusting the voltage set point. The current target or set point may be output of a corque control that sets a torque target by adjusting the current target. The torque target may be output by a speed control that sets a speed target of the electric machine. The voltage set point may be constant over time (at least within a time span). The PWM signals may be generated by a PWM generator that receives the voltage set point.

The carrier signal may have a repetitive waveform that represents a frequency. This provides an efficient electromagnetic coupling via the winding systems due to the nature of the bifilar winding arrangement. The frequency may be set to a predefined value. This allows a simple solution. The frequency may alternatively be adjustable (e.g., during operation. This allows a reliable measurement and detection of the fault.

The arrangement may be configured to force a rotor to rotate around an axis of rotation with one or more adjustable rotational frequencies. For each adjustable rotational frequency of the rotor the frequency of the carrier signal may be larger than the rotational frequency. This allows to avoid an interference with the rotation of the rotor.

It may be provided that the frequency of the carrier signal is greater than the maximum synchronous electrical frequency.

Each of the inverters may comprise a plurality of switches (e.g., semiconductor components such as transistors or the like) switched in accordance with the reference signals with one or more adjustable switching frequencies. It may be provided that for each adjustable switching frequency the frequency of the carrier signal is smaller than the switching frequency. In this case it is possible to distinguish between the effects of inverter switching and effects of the carrier signal.

For each adjustable rotational frequency of the rotor the frequency of the carrier signal may be configured to be no integer multiple of the rotational frequency. Alternatively, or in addition, for each adjustable switching frequency the switching frequency may be configured to be no integer multiple of the frequency of the carrier signal. The frequency of the carrier may be defined to be different from any of the expected current harmonics in the system including integer multiple of switching frequency plus or minus inter multiple of electrical frequency of the supply. This may further reduce interferences or to improve the selectivity between the carrier signal effects and electrical machine effects. Further a combination of switching frequency and synchronous frequency that would be expected in a PWM-fed operation may be avoided.

The control unit may comprise a bandpass filter. The bandpass filter may comprise a window of a (e.g., fixed or variable) frequency range around the spectrum of the carrier signal. By this, the further analysis may be simplified and improved.

According to an example, the carrier signal is a sinusoid or a square wave. This allows an effective coupling between the winding systems.

The electrical property sensed by the sensor may be a voltage or an electrical current or a combination thereof. Thereby, simple but effective analysis is possible. The sensor in the possible form of a current sensor may include, for example, a Hall sensor and/or a loop sensor.

According to an example, the amplitude of the carrier signal is (e.g., much) smaller than the amplitude of the reference signal for the first inverter, e.g., not more than 2 to 3 persent of the main signal. This allows to further improve the selectivity between the carrier signal and effects of the reference signal input.

The control unit may be configured to detect a fault based on the sensor signals by detecting a change of the sensor signals. By this, a simple but robust detection can be provided.

The control unit may be configured to compare the sensor signals with one or more predetermined (e.g., expected) sensor signals, and to detect a fault based on the sensor signals by detecting that a difference between the sensor signals and the one or more expected sensor signals is above or below a given threshold, or by detecting the superimposed signal mixed with one of the machine signals (PWM, rotation signal or the like). This provides a high precision of the measurement.

The first winding system may comprise three electrical conductors connected with each other at a (first) star point. The second winding system may comprise three electrical conductors connected with each other at a (second) star point. The first inverter may provide one respective phase to each of the three electrical conductors of the first winding system. The second inverter may provide one respective phase to each of the three electrical conductors of the second winding system. This allows an efficient operation of the electric machine.

According to one aspect, there is provision for an electric machine. The electric machine includes the arrangement according to any configuration described herein, (e.g., including a stator). The electrical machine may further include a rotor, wherein the rotor and the stator are movable relative to each other, in particular rotatable.

According to one aspect, a vehicle, (e.g., an aircraft), is disclosed. The vehicle includes the electric machine according to any configuration described herein, in particular for driving a thrust-generating apparatus, e.g. a propeller. The advantages of the electric machine described herein apply especially to a vehicle, in particular an aircraft. However, the assembly may also be used in a gas pump, in a marine engine, in a wind turbine, or in a generator.

### BRIEF DESCRIPTION OF THE DRAWINGS

Embodiments will now be described by way of example with reference to the figures in which:
- FIG. 1: depicts a schematic sectional illustration of an example of a basic design of a permanently excited, three-phase electric machine having an internal rotor.
- FIG. 2: depicts a schematic, perspective exploded view of an example of a design of an arrangement comprising a stator of the electric machine according to FIG. 1 with tooth windings.
- FIG. 3: depicts a schematic illustration of an example of part of a tooth winding of the arrangement according to FIG. 2, in which turns of a first and second electrical conductor are arranged in a bifilar manner.
- FIG. 4: depicts a schematic illustration of an example of a permanently excited electric machine for operation at a three-phase AC voltage.
- FIGS. 5 and 6: depict schematic circuit diagram illustrations of examples of tooth windings and inverter units of an inverter of the electric machine according to FIG. 2 and FIG. 4, respectively.
- FIG. 7: depicts an example of switching signals for the inverter units.
- FIG. 8: depicts a block diagram of an example of components of the inverter.
- FIG. 9: depicts a block diagram of an arrangement for detecting a fault in a bifilar motor.
- FIG. 10: depicts a block diagram of an example analysis for detecting the fault in the bifilar motor.
- FIG. 11: depicts a further block diagram of an arrangement for detecting a fault in a bifilar motor.
- FIG. 12: depicts an example of an aircraft in the form of an airplane having an electrically driven propeller and the electric machine.

### DETAILED DESCRIPTION

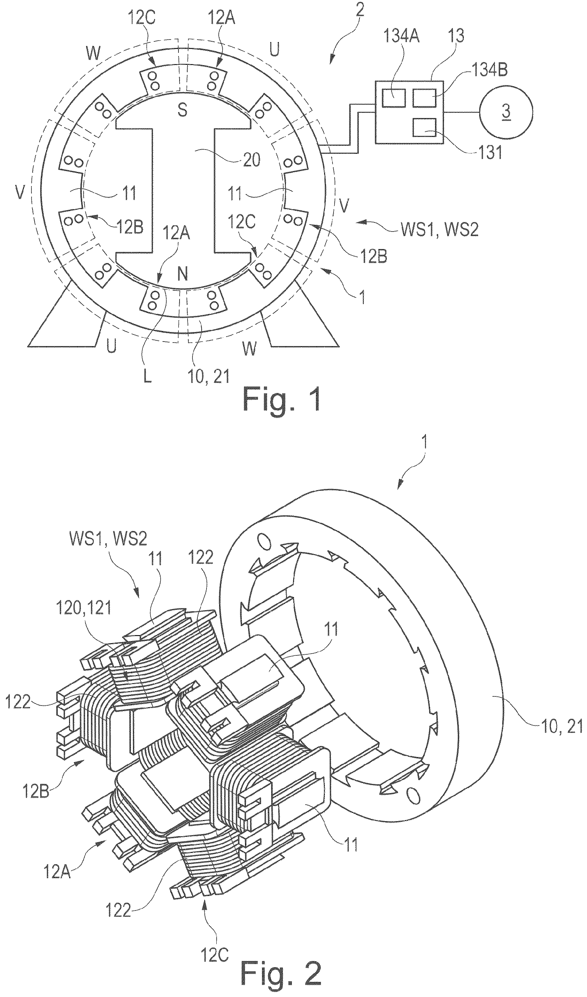

FIG. 1 shows a schematic sectional illustration of a rotating electric machine 2 in the form of a permanently excited synchronous machine. In FIG. 1, the electric machine 2 is in the form of a machine with an internal rotor. The electric machine 2 includes an arrangement 1 that comprises a stator 21 that has an opening, in particular a through-opening in which a rotor 20 is arranged in a rotatably mounted manner.

The stator 21 includes a body 10 in the form of a laminated core, on which teeth are anchored, which are referred to below as stator teeth 11. The stator teeth 11 are aligned with an air gap L between the body 10 of the stator 21 and the rotor 20. The stator teeth 11 protrude radially from the body 10, in the present case radially inward. The stator 21 has a stator winding that includes a plurality of windings 12A-12C (in the form of tooth windings). The stator winding in the present case is designed for three-phase operation, (connected to a three-phase AC voltage having phases U, V, W). During intended operation of the electric machine 2, the AC voltage is accordingly applied to the stator winding.

The rotor 20 is in the form of a salient-pole rotor that includes permanent magnets for providing the magnetic flux. In the present configuration, there is provision for the rotor 20 to have exactly one magnetic north pole N and one magnetic south pole S. In alternative configurations, there may also be provision for more magnetic poles, e.g., in alternation in the circumferential direction transverse to an axis of rotation of the rotor 20 (relative to the stator 21).

The rotor 20 is rotatably mounted. As a result of the three-phase AC voltage, the phases U, V, W thereof each being phase-shifted by 120°, a magnetic rotating field is generated during intended operation, which magnetic rotating field interacts with the permanently excited magnetic field provided by the rotor 20 such that a corresponding rotational movement of the rotor 20 in relation to the stator 21 may be brought about during operation of the motor. In certain examples, the electric machine 2 is used as a drive motor, e.g., for a propeller of an aircraft. The portions of the stator winding assigned to the respective phases U, V, W are schematically illustrated in FIG. 1. One winding 12A-12C is in each case respectively assigned to one of the phases U, V, W.

The stator winding of the electric machine 2 is connected to an inverter system 13 (in this example of a three-phase design). The inverter system 13 provides the electric AC voltage with the three phases U, V, W. The inverter system 13 obtains the electric energy required for the intended operation from an energy source 3 connected to the inverter system 13. In the present configuration, the energy source 3 is a DC voltage source which provides electrical energy from a suitable electrical energy store, for example, a rechargeable battery or the like. Alternatively, or additionally, a fuel cell and/or the like or, in the case of stationary applications, an energy supply from a public energy supply network may be provided, for which purpose a rectifier for converting an alternating current of the public energy supply network into direct current may be provided.

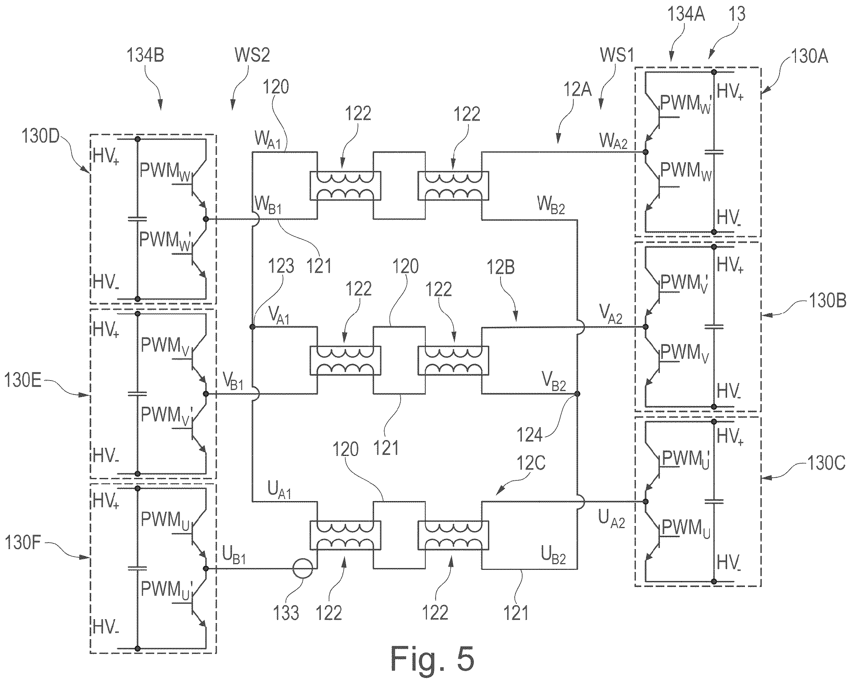

The inverter system 13 has inverter units assigned for providing the phases U, V, W, which inverter units are explained in more detail further below in connection with FIG. 5, for example. In this case, each inverter unit has its own half-bridge circuit. The half-bridge circuits are connected to a DC link circuit, which is not illustrated any further in FIG. 1, of the inverter system 13, in order to thus be supplied with electrical energy. The DC link circuits may have a voltage of 25 V or more, 100 V or more, or in the range of 800 to 3000 V.

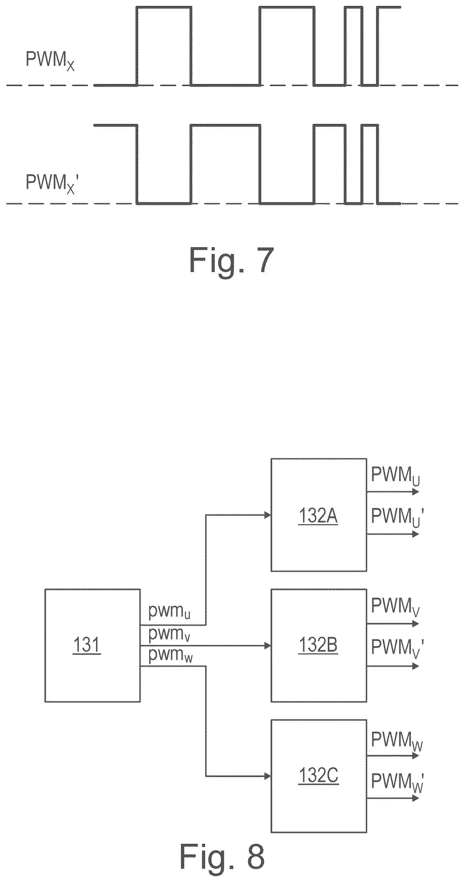

The half-bridge circuit has a series circuit including two electronic switching elements (e.g., transistors) that are connected to the link circuit DC voltage of the inverter system 13. The electronic switching elements are operated in a clock mode, as explained in more detail below in connection with FIG. 7, which provides clock patterns in the manner of a PWM signal, for example. The corresponding phase U, V, W of the three-phase AC voltage is then available at a respective center tap of the half-bridge circuits. Filtering is carried out by the inductance of the windings 12A-12C, with the result that an appropriate AC current is established for each phase U, V, W, which AC current may be virtually sinusoidal if the inverter units are suitably controlled.

The inverter system 13 comprises a first inverter 134A and a second inverter 134B. the first inverter 134A comprises a first set of inverter units, in this example three, i.e., one for each phase U, V, W. The second inverter 134B comprises a second set of inverter units, in this example three, i.e., one for each phase U, V, W. The windings 12A-12C are divided in two winding systems WS1, WS2. Thereof, first winding system WS1 is electrically connected to the first inverter 134A and is not electrically connected to the second inverter 134B. Accordingly, the second winding system WS2 is electrically connected to the second inverter 134B and is not electrically connected to the first inverter 134A. The first inverter 134A can operate the first winding system WS1 independently of the second inverter 134B and second winding system WS2 (and vice versa). If one of the inverters 134A, 134B or one of the winding systems WS1, WS2 fails, the other can still be operated to drive the rotor 20.

For the sake of simplicity, only one energy source 3 is shown. However, more than one energy source can be provided or the energy source 3 may have two or more mutually independent parts. For example, the first inverter 134A is provided with power from a first part of the energy source 3, and the second inverter 134B is provided with power from a second part of the energy source 3.

The inverter system 13 comprises a control unit 131. The control unit 131 controls the inverters 134A, 134B.

For the sake of simplicity, the inverter system 13 is counted here as part of the arrangement and thus as part of the electric machine 2, but may also be described together with it as an electrical drive device.

FIG. 2 shows a schematic exploded illustration of the stator 21 of the electric machine 2. The stator 21 has the body 10 in which the stator teeth 11 may be joined together with the annular body 10 by a mechanical connection and may thus be fixed thereon, in particular, mechanically fixed thereon. Alternatively, the stator teeth 11 may be formed in one piece with the body 10.

The stator teeth 11 are fitted with respective winding portions 122 of the windings 12A-12C. The stator winding has a plurality of windings 12A-12C, (e.g., exactly three windings). A respective one of the windings 12A-12C may be arranged at least on one of the stator teeth 11. In the present case, each winding 12A-12C extends over a plurality of stator teeth 11, (e.g., specifically two opposite stator teeth). For this purpose, each winding 12A-12C may have at least one winding portion 112 or a plurality of winding portions 122 (e.g., two winding portions). Each winding portion 122 surrounds (e.g., exactly) one stator tooth 11. In this example, each winding portion 122 forms a coil. For example, each winding 12A-12C comprises at least one coil or more than one coil. In the present example, each winding 12A-12C comprises two coils.

Each winding 12A-12C has a respective first electrical conductor 120, which at each winding portion 122 is arranged in a plurality of turns circumferentially around the respective stator tooth 11. Between the winding portions 122, the first electrical conductor 120 includes one or more corresponding connecting portions via which the portions of the first electrical conductor 120 at the winding portions 122 are electrically connected to each other.

Each winding 12A-12C further has a respective second electrical conductor 121 that likewise at each winding portion 122 is arranged in a plurality of turns circumferentially around the respective stator tooth 11. Between the winding portions 122, the second electrical conductor 121 includes one or more corresponding connecting portions via which the portions of the second electrical conductor 121 at the winding portions 122 are electrically connected to each other.

The first electrical conductors 120 and the second electrical conductors 121 each have end portions to which they are connected in a manner described in more detail below. Between the respective end portions (and, in this example, over their entire lengths), the first electrical conductors 120 and the second electrical conductors 121 are electrically insulated from each other. The windings 12A-12C are connected in the electric machine 2 such that the three-phase connection to the inverter system 13 is present.

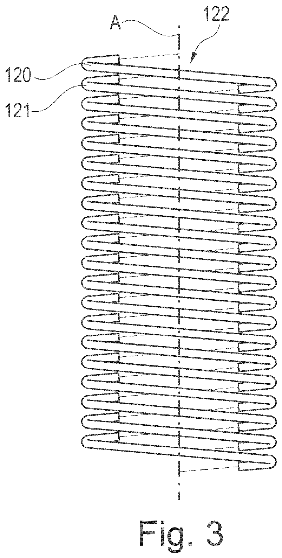

FIG. 3 shows a schematic illustration of a winding portion 122 of one of the windings 12A-12C. The first electrical conductor 120 in this case is wound around the stator tooth 11, which is not illustrated in FIG. 3. The winding on the stator tooth 11 extends here around and along a winding axis A. In the present case, the winding portion 122 is configured in the form of an elongate coil along the winding axis A.

Furthermore, the winding portion 122 of the winding 12A-12C includes the respective second electrical conductor 121 that is electrically insulated from the first electrical conductor 120. The second electrical conductor 121 also has a plurality of turns arranged circumferentially around the same stator tooth 11, so that the winding on the stator tooth 11 extends around and along the winding axis A. The respective turns of the first and second electrical conductors 120, 121 are arranged in a bifilar manner. In other words, one turn of the first electrical conductor 120 is arranged between two adjacent turns of the second electrical conductor 121 (and vice versa) along the winding axis A of the winding portion 122 (with the exception of the outermost two turns). This has the advantage that, in the event of an inter-turn short circuit between two adjacently arranged turns, the inter-turn short circuit occurs between the first electrical conductor 120 and the second electrical conductor 121. An inter-turn short circuit thus does not occur inside a winding of the same electrical conductor. This makes it possible to prevent large currents in the case of an inter-turn short circuit and therefore large thermal and electrical stresses.

Optionally, each first electrical conductor 120 and/or each second electrical conductor 121 includes two or more individual conductors insulated from each other.

Notably, the coils formed by the respective winding portions 122 may be elongate (e.g., in a direction parallel to the rotor 20 rotational axis), as shown in FIG. 2. Here, the winding axis A may be defined to be at a position inside the coil, e.g., in the center of the coil. More complicated coil shapes are also possible, such as bent along the longitudinal axis, particular for alternative machine topologies such as a transverse flux machine or the like.

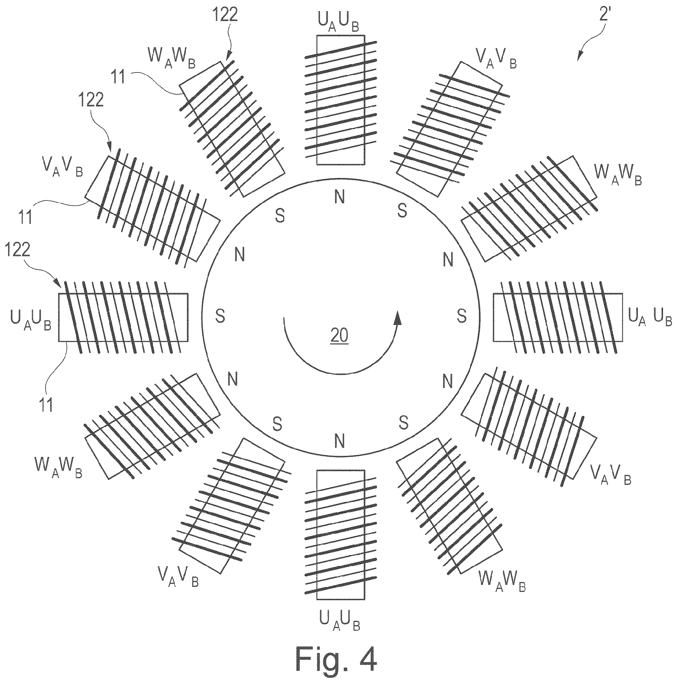

FIG. 4 shows a schematic illustration of an electric machine 2' in the form of a synchronous machine that, in contrast to the electric machine 2 according to FIGS. 1 and 2, now has a twelve-pole rather than a six-pole design. The corresponding stator therefore has twelve stator teeth 11. These are arranged equidistantly in the circumferential direction in the present case. The rotor 20 is again arranged in a through-opening formed by the stator, which rotor likewise has a twelve-pole design in this configuration and therefore provides six north poles N and six south poles S arranged in alternation in the circumferential direction. Here too, the magnetic flux provided by the rotor 20 is provided by permanent magnets arranged, e.g., in the region of the outer circumference of the rotor 20. The numbers of poles are provided by way of example and other numbers are also possible.

Each stator tooth 11 of the stator teeth 11 is also equipped here with a winding portion 122 of one of the three windings 12A-12C. Each winding of the three windings 12A-12C again has a respective first electrical conductor and a respective second electrical conductor (illustrated by different line thicknesses in FIG. 4 purely for the purposes of illustration) that are wound onto the respective stator teeth 11 in a bifilar manner. This electric machine 2' is likewise designed to be supplied with a three-phase AC voltage, wherein each of the phases is again denoted using U, V, W.

Notably, the electric machines 2, 2' described with reference to FIGS. 1-4 are inner-runner radial flux machines. Notably, the principles described herein can also be applied to outer-runner radial flux machines as well as to a transverse flux machine and to an axial flux machine.

FIG. 5 shows an electrical interconnection of the windings 12A-12C and the inverter units 130A-130F of the inverter system 13 of the electric machine 2 according to FIG. 1.

The first electrical conductors 120 (e.g., three first electrical conductors) of the windings 12A-12C form a first winding system WS1 and the second electrical conductors 121 (e.g., three second electrical conductors) of the windings 12A-12C form a second winding system WS2. The first winding system WS1 is connected to three inverter units 130A-130C. These three inverter units 130A-130C form the first three-phase inverter 134A. Each first electrical conductor 120 is connected with an end portion WA2, VA2, UA2 thereof to one of the inverter units 130A-130C. The respective other end portions WA1, VA1, UA1 of the first electrical conductors 120 are electrically connected to each other at a first star point 123.

The second winding system WS2 is connected to further three inverter units 130D-130F. These further three inverter units 130D-130F form the second three-phase inverter 134B. Each second electrical conductor 121 is connected with an end portion WB1, VB1, UB1 to one of the inverter units 130D-130F. The respective other end portions WB2, VB2, UB2 of the second electrical conductors 121 are electrically connected to each other at a second star point 124.

The inverter system 13 thus includes six inverter units 130A-130F, two for each of the three phases U, V, W, and of these two inverter units, one each for the first winding system WS1 and one for the second winding system WS2. As already described, each inverter unit 130A-130D has a half-bridge circuit. An optional capacitor is used as a low-pass filter in each case.

A (e.g., same) DC voltage (designated by HVA+ and HVA-) is applied to the inverter units 130A-130D of both inverters 134A, 134B of the inverter system 13. For example, the DC voltage is 25 V or more, 100 V or more, or in a range of 800 to 3000 V.

Furthermore, all six winding portions 122 for the six stator teeth 11 are shown, wherein each winding of the first and second electrical conductors 120, 121 is illustrated only schematically.

First, the winding 12A for a first phase W will be considered. This winding 12A includes a first electrical conductor 120 and a second electrical conductor 121. Both electrical conductors 120, 121 extend over winding portions 122 on the same (e.g., one or more, in this example two) stator teeth 11 but are insulated from one another. Both electrical conductors 120, 121 have the aforementioned two end portions WA1, WA2, WB1, WB2. Here, both electrical conductors 120, 121 are free of junctions between their end portions WA1, WA2, WB1, WB2. The electrical conductors 120, 121 each establish an electrical connection between the respective two end portions WA1, WA2, WB1, WB2. The winding portions 122 of the winding 12A lie between the end portions WA1, WA2, WB1, WB2 of the electrical conductors 120, 121.

One end portion WA2 of the first electrical conductor 120 is electrically connected to a first inverter unit 130A of the inverter system 13, and the other end portion WA1 of the first electrical conductor 120 is electrically connected to the first star point 123. One end portion WB1 of the second electrical conductor 121 is electrically connected to a fourth inverter unit 130D of the inverter system 13, and the other end portion WB2 of the second electrical conductor 121 is electrically connected to the second star point 124.

The end portions of the first electrical conductor 120 of the winding 12B for a second phase V are denoted using VA1 and VA2. One end portion VA2 of the first electrical conductor 120 is electrically connected to the inverter system 13, specifically, to a second inverter unit 130B thereof, and the other end portion VA1 of the first electrical conductor 120 is electrically connected to the first star point 123.

The end portions of the second electrical conductor 121 of the winding 12B for the second phase V are correspondingly denoted using VB1 and VB2. One end portion VB1 of the second electrical conductor 121 is electrically connected to the inverter system 13, specifically, to a fifth inverter unit 130E thereof, and the other end portion VB2 of the second electrical conductor 121 is electrically connected to the second star point 124.

The end portions of the first electrical conductor 120 of the winding 12C for a third phase U are denoted using UA1 and UA2. One end portion UA2 of the first electrical conductor 120 is electrically connected to the inverter system 13, specifically to a third inverter unit 130C thereof, and the other end portion UA1 of the first electrical conductor 120 is electrically connected to the first star point 123.

The end portions of the second electrical conductor 121 of the winding 12C for the third phase U are correspondingly denoted using UB1 and UB2. One end portion UB1 of the second electrical conductor 121 is electrically connected to the inverter system 13, specifically, to a sixth inverter unit 130F thereof, and the other end portion UB2 of the second electrical conductor 121 is electrically connected to the second star point 124.

As another example, each of the first and second inverters may comprise a full-bridge circuit for each of the phases U, V, W of the respective winding system. Specifically, each of the first and second inverters 134A, 134B may comprise two phase units for each phase U, V, W, wherein an electrical conductor of each of the electrical phases U, V, W is connected between the respective two phase units. Thus, each winding system comprises six phase units. Each of the phase units has two switching elements connected in series and is connected to a DC voltage intermediate circuit of the inverter. The respective phase U, V, W of the multiphase electrical AC voltage may be provided at a center tap between the switching elements. Such a circuit arrangement has no star point and allows precise control.

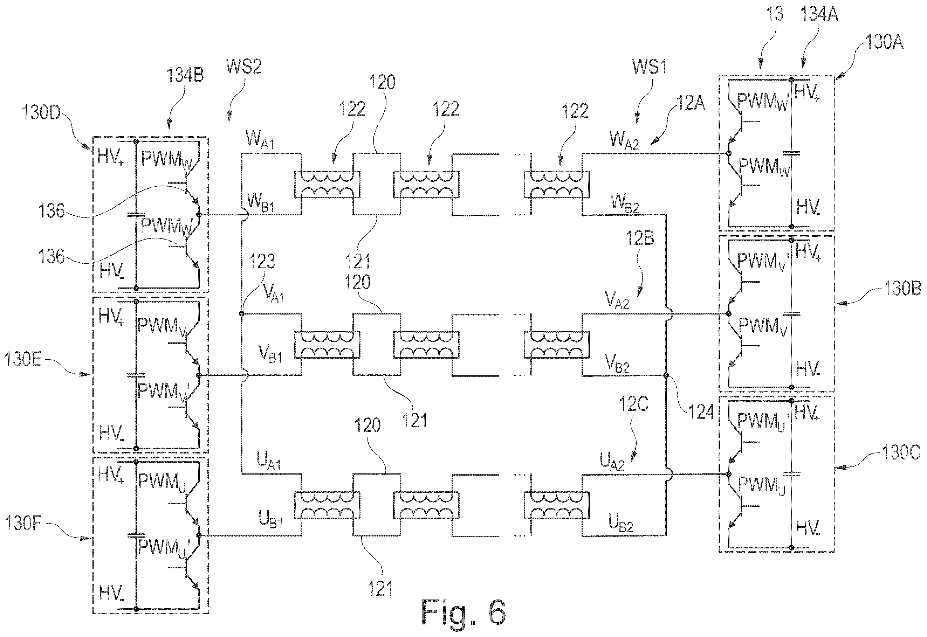

FIG. 6 shows substantially the same circuitry as FIG. 5, wherein more winding portions 122 are illustrated. It can be seen that the windings 12A-12C may have a smaller or larger number of winding portions 122 depending on the application, e.g., in total six (cf. in particular FIGS. 2 and 5), twelve (cf. in particular FIG. 4), or 18, to name just some examples.

While the windings 12A-12C are arranged between the inverter units 130A-130F according to FIGS. 5 and 6, this arrangement is only exemplary.

Furthermore, it may be seen that in FIGS. 5 and 6 the end portions, connected to the inverter units 130A-130F, of the first and second conductors 120, 121 of each individual one of the windings 12A-12C face away from one another with respect to the common winding portions 122.

To create the alternating three-phase voltage, a current introduced into the electrical conductors 120, 121 are controlled by switching the transistors (or other types of switches 136) of the inverter units 130A-130F. The transistors are controlled by signals, in the present case by pulse width modulated signals, which may also be referred to as PWM signals for short (pulse width modulation). The PWM signals alternate between two discrete values, e.g., "on" and "off", which open and close the corresponding transistor (or other type of switch), respectively.

FIG. 7 shows an example of such PWM signals, wherein X stands for the respective phase U, V, W. The PWM signals for the individual phases U, V, W are, e.g., the same, only shifted in time.

Furthermore, an inverted PWMX' signal is provided for each PWMX signal, which assumes the corresponding opposite discrete value in relation to the PWMX signal over time. The PWMX' signal corresponds to the inverted PWMX signal.

As illustrated, e.g., with reference to FIGS. 5 and 6, for each winding 12A-12C, the reverse PWM signal PWMW', PWMV', PWMU' is applied to the respective transistor of the inverter unit 130A, 130B, 130C of the first electrical conductor 120 connected to the positive pole HV+ of the DC voltage. By contrast, the PWM signal PWMW, PWMV, PWMU is applied to the transistor of the inverter unit 130A, 130B, 130C of the first electrical conductor 120 connected to the negative pole HV- of the DC voltage.

In the second electrical conductors 121, the PWM signals are applied in reverse. The PWM signal PWMW, PWMV, PWMU is applied to the transistor of the inverter unit 130D, 130E, 130F of the second electrical conductor 121 connected to the positive pole HV+ of the DC voltage. By contrast, the reverse PWM signal PWMW', PWMV', PWMU' is applied to the transistor of the inverter unit 130D, 130E, 130F of the second electrical conductor 121 connected to the negative pole HV- of the DC voltage.

It may therefore be seen that the same PWM signals are applied to the inverter units 130A-130C of the first electrical conductor 120 as to the inverter units 130D-130F of the second electrical conductor 121.

FIG. 8 illustrates a possible generation of the PWM signals PWMX and the reverse PWM signals PWMX'. The control unit 131 of the inverter system 13 generates signals for the three phases U, V, W, which are designated here as pwmu, pwmv, pwmw. These are each provided to a power electronics driver 132A-132C, which generate the respective PWM signals and reverse PWM signals for the corresponding phase U, V, W based on them. The power electronics drivers 132A-132C are connected (e.g., electrically) to the inverter units 130A-130F of the respective phase U, V, W.

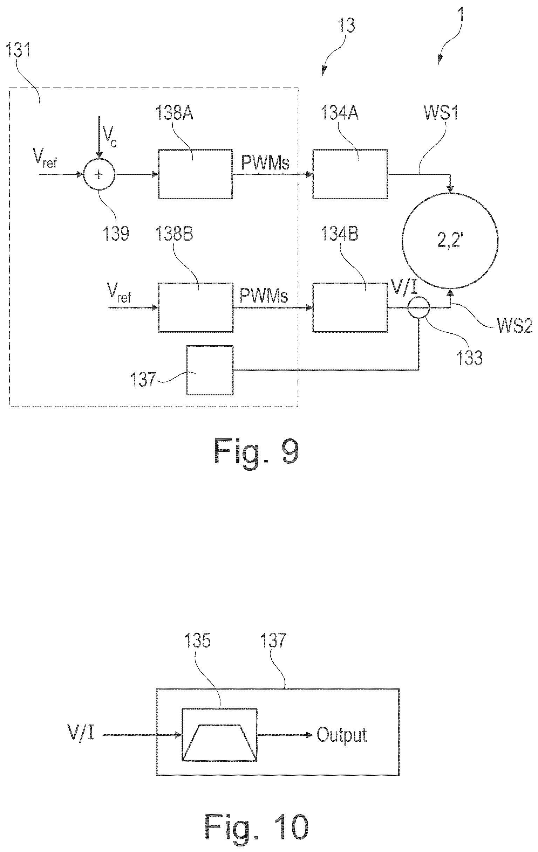

FIG. 9 shows the arrangement 1 for one of the electric machines 2, 2' described herein, and the respective electric machine 2, 2'.

The arrangement 1 comprises the first winding system WS1 and the second winding system WS2. The winding systems WS1, WS2 are electrically disconnected (and isolated) from one another. As described above, the two winding systems WS1, WS2 have electrical conductors 120, 121 that form a plurality of coils in a bifilar arrangement. At least one (first) electrical conductor 120 (in the present example three electrical conductors 120) of the first winding system WS1 and at least one (second) electrical conductor 121 (in the present example three electrical conductors 121) of the second winding system WS2 are at least partially wound around a common winding axis A that alternate between winding systems in a direction of the winding axis A (e.g., as shown in Fig. 4). In the direction of the winding axis A, each turn of the first electrical conductor 120 within the coil is arranged (directly) between two turns of the second electrical conductor 121 (isolated from one another). Correspondingly, in the direction of the winding axis A, each turn of the second electrical conductor 121 within the coil is arranged (directly) between two turns of the first electrical conductor 120 (isolated from one another). Denoting the first electrical conductor 120 as "A" and the second electrical conductor 121 as "B", the arrangement along the winding axis A may be A-B-A-B (and so forth).

The arrangement 1 further comprises the inverter system 13 which includes the first inverter 134A for the first winding system WS1 and the second inverter 134B for the second winding system WS2.

The control unit 131 of the inverter system 13 may comprise several blocks or components that may be embodied as software and/or hardware and that may be located adjacent or distant to one another.

The control unit 131 is configured to generate and provide reference signals Vref to control the first and second inverters 134A, 134B to provide a respective AC voltage to the respective winding system WS1, WS2. The control unit 131 provides reference signals Vref for the first inverter 134A to provide the AC voltage to the first winding system WS1 and the control unit 131 provides reference signals Vref for the second inverter 134B to provide the AC voltage to the second winding system WS2. The reference signals Vref for the first inverter 134A may be identical to the reference signals Vref for the second inverter 134B, or they may be different (e.g., inverted with respect thereto).

In the present example, the reference signals Vref are generated as (e.g., three-phase sinusoidal) voltage signals (e.g., voltage set points provided by a torque control). The reference signals Vref may be, e.g., provided as an analogue voltage or, e.g., as a signal indicative for a voltage such as a digital signal indicating a voltage.

The control unit 131 is further configured to superimpose a carrier signal Vc to the reference signal Vref for the first inverter 134A. Thereby, the carrier signal Vc is injected into the first winding system WS1. In the present example, the carrier signal Vc is added to the reference signal Vref by means of an adder 139 (hardware and/or software). The carrier signal Vc in this example is generated and provided as a voltage signal. The carrier signal Vc may be, e.g., provided as an analogue voltage or, e.g., as a signal indicative of a voltage such as a digital signal indicating a voltage.

The adder 139 provides the added signal acquired by adding the carrier signal Vc to the reference signal Vref to a PWM generator 138A. The PWM generator 138A creates PWM signals in accordance with the added signal. For example, the PWM generator 138A comprises the power electronics drivers 132A-132C described above. The created PWM signals which incorporate the carrier signal Vc are provided to the first inverter 134A which provides an according (three-phase) AC to the first winding system WS1 of the bifilar electric motor 2 or 2'.

In parallel, the reference signal Vref is provided to a second PWM generator 138B which creates PWM signals in accordance with the reference signal Vref (without the carrier signal Vc). For example, the second PWM generator 138B comprises power electronics drivers as described above. The created PWM signals are provided to the second inverter 134B which provides an according (three-phase) AC to the second winding system WS2 of the bifilar electric motor 2 or 2'.

By the inductive coupling between the two bifilar winding systems WS1, WS2, the carrier signal Vc is induced from the first winding system WS1 onto the second winding system WS2. Therefore, the voltages and/or currents in the second winding system WS2 are affected by the carrier signal Vc.

The arrangement 1 comprises at least one sensor 133 arranged in the second winding system WS2 for sensing an electrical parameter of the second winding system WS2, such as a voltage and/or an electrical current strength. The sensor 133 may be arranged in one of the phases U, V, W or one respective sensor may be arranged in each of the phases U, V, W or one respective sensor may be arranged in two of the phases U, V, W. FIG. 5 shows one example for an arrangement of one sensor 133. The sensor(s) 133 generate sensor signals that are indicative of the at least one electrical parameter.

In case of a fault such as an inter-turn short circuit, the coupling between the winding systems WS1, WS2 changes, so the sensor signals change. To detect a fault based on the sensor signals, the control unit 131 is further configured to receive the sensor signals from the at least one sensor 133. Here, the control unit 131 comprises an analyzer 137 (e.g., hardware and/or software) which analyzed the sensor signals.

The carrier signal Vc has repetitive waveform with a frequency of repetition. As shown in FIG. 10, the analyzer 137 may comprise a bandpass filter 135 adjusted to the frequency of the carrier signal Vc. The bandwidth of the bandpass filter 135 defines the range of frequencies between a frequency that is smaller than the carrier signal Vc frequency and a frequency that is larger than the carrier signal Vc frequency. Frequencies outside this range are suppressed. The analyzer 137 analyzes the output of the bandpass filter 135. For example, the analyzer 137 of the control unit 131 is configured to detect a fault based on the sensor signals by detecting a change (e.g., step, peak or the like) of the sensor signals. Alternatively, or in addition, the analyzer 137 of the control unit 131 may be configured to compare the sensor signals with one or more predetermined expected sensor signals, and to detect a fault based on the sensor signals by determining the difference between the sensor signals and the one or more expected sensor signals and to detect whether the difference is above or below a predetermined threshold (e.g., stored in a memory).

The frequency of the carrier signal Vc may be predetermined or adjustable, e.g., based on operating condition (e.g., speed) of the electric machine 2, 2'. The carrier signal Vc may be a sinusoid. In another example, the carrier signal may be a square wave.

In order not to adversely affect the operation of the electric machine 2, 2', the amplitude of the carrier signal Vc is (e.g., significantly) smaller than the amplitude of the reference signal Vref for the first inverter 134A, e.g., 2 to 3 percent of the main signal. In the present example, additionally the frequency of the carrier signal Vc is set such that an interaction with the operation of the machine is minimized. In this regard, the rotor 20 is configured to rotate around its axis of rotation with an adjustable rotational frequency, wherein for each adjustable rotational frequency of the rotor 20 the frequency of the carrier signal Vc is larger than the rotational frequency. In addition, the switches 136 of the inverters 134A, 134B are switched in accordance with the reference signals Vref with adjustable switching frequencies, wherein for each adjustable switching frequency the frequency of the carrier signal Vc is smaller than this switching frequency to enable the inclusion of the carrier signal in the pulse width modulated voltage supply to the stator winding. The frequency of the carrier signal Vc is set in between the switching frequency and the maximum rotational frequency.

The frequency of the carrier signal Vc may be set higher than the (e.g., maximum) frequency of the synchronous operation of the electric machine 2, 2' and/or lower than the switching capability of the inverter 134A, 134B. The frequency of the carrier signal Vc may be set unequal to (e.g., higher than) the fundamental operating frequency of the electric machine 2, 2' and/or unequal to frequencies that occur in a normal (healthy) operation of the electric machine 2, 2'.

In addition, for each adjustable rotational frequency of the rotor 20 the frequency of the carrier signal Vc is no integer multiple of the rotational frequency (as during operation the frequency of rotation varies over a range of rotational frequencies the carrier signal may be adjustable while operating) and for each adjustable switching frequency the switching frequency is no integer multiple of the frequency of the carrier signal Vc and not any of the combinations of switching and synchronous frequency.

By this, an impact of the carrier signal Vc on the operation of the motor can be significantly reduced.

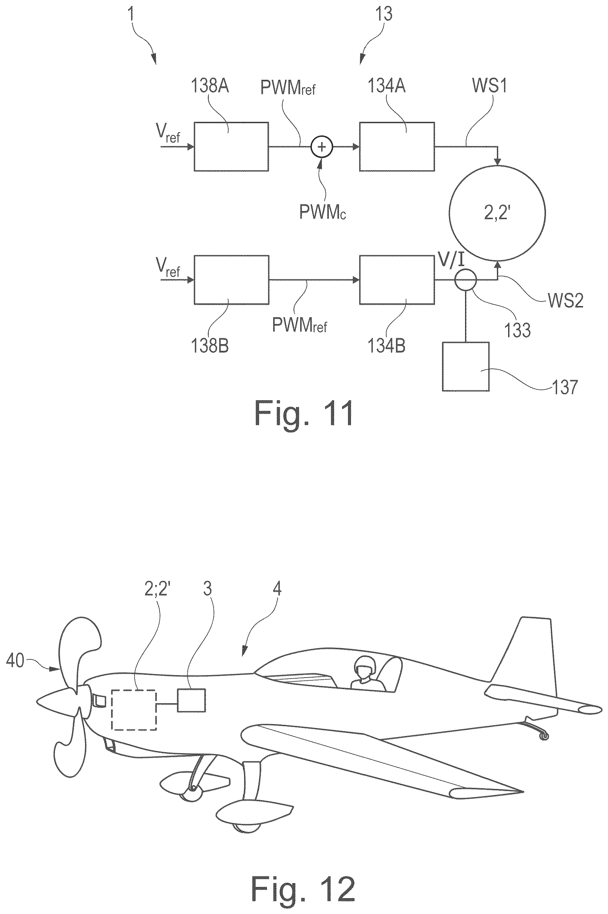

FIG. 11 shows a similar arrangement 1 as shown in FIG. 10. According to FIG. 11, however, the carrier signal PWMc is provided in the form of an PWM signal which is superimposed on the PWM reference signal PWMref. To avoid excessive losses in the power transistors the carrier signal PWMc may be generated so that the resulting waveform PWMc + PWMref will still be a square wave as shown in Fig. 7. Notably, the superposition of the carrier signal can be performed also at even further locations.

This superposition can be replaced by a mixer (e.g., a signal mutiplier) and, in that case, there is a mixing of the PWMref signal and the carrier signal PWMc which may create side-bands which can be considered in the detection as described above.

When a fault (e.g., an inter-turn short circuit) is detected, the control unit 131 optionally switches off all PWM signals (e.g., to zero). Optionally, the positive and or the negative pole HV+, HV- of the DC voltage source 3 are disconnected from the inverter units 130 A- 130 F. The control unit 131 may cause a three-phase short circuit.

The control unit 131 may initiate other countermeasures. Alternatively, the error may first be displayed to a user, who may then activate one of the described countermeasures via an input device or mechanism.

Alternatively, or additionally to the above-described fault detection using the carrier signal, a voltage may be measured at the star points 123 and 124. These voltages may be compared with one or more comparators, for example, in each case in relation to an earth potential or another reference potential. The comparison results of the comparator may be observed for changes and/or the exceedance of a threshold. Alternatively, or additionally, the voltage between the two star points 123, 124 may be measured by a voltage sensor. This voltage may be observed for changes and/or the exceedance of a threshold to detect a fault.

Since the voltage is, for example, supplied from opposite ends of the bifilar windings, a known potential difference (with the peak equal to the DC link) will be seen between the star points of the respective systems during healthy operation. If a fault arises, this potential difference will change. Thus, the star point to star point potential difference can be monitored for an effective fault detection. Alternatively, the star point-to-ground voltage of the two systems can be measured and compared (the ground may be defined as a potential between two (e.g., equal) voltage supplies forming the DC link). Under healthy conditions, these two voltages should be equal in magnitude but opposite in polarity. A fault condition can alter this relationship. For enhancing sensitivity and integrity, different harmonic frequency components can be selected and utilized based on the operating conditions.

Additionally or alternatively, the star point potentials of the two bifilar systems can be compared individually against an artificial star point, e.g., formed by a (e.g., low signal) external circuit. Similar deviations occurring in both comparison between the machine star point and the artificial star point will indicate a turn-to-turn fault. Deviations in the comparison of only one of the machine star points to one of the artificial star points may indicate other faults than turn-to-turn in an early stage before inductive coupling effects become notable. As an example the artificial star points may be formed by a three phase winding operated by a three-phase AC, e.g., synchronized with the AC of the electric machine 2, 2'.

FIG. 12 shows an aircraft 4 in the form of an electrically driven airplane. The aircraft 4 includes a propeller 40 which is driven by the above-described electric machine 2 according to FIG. 2 (alternatively by the electric machine 2' according to FIG. 4).

The aircraft 4 furthermore includes an energy source 3 in the form of an electric battery. The electric machine 2 is supplied with energy by the energy source 3, wherein the energy source 3 is electrically connected to the inverter system 13.

The disclosure is not limited to the embodiments described above, and various modifications and improvements may be made without departing from the concepts described here. Any of the features may be used separately or in combination with any other features, unless they are mutually exclusive, and the disclosure extends to and includes all combinations and sub-combinations of one or more features that are described herein.

It is to be understood that the elements and features recited in the appended claims may be combined in different ways to produce new claims that likewise fall within the scope of the present disclosure. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

While the present disclosure has been described above by reference to various embodiments, it may be understood that many changes and modifications may be made to the described embodiments. It is therefore intended that the foregoing description be regarded as illustrative rather than limiting, and that it be understood that all equivalents and/or combinations of embodiments are intended to be included in this description.

### LIST OF REFERENCE SIGNS

- 1: arrangement
- 10: body
- 11: stator tooth
- 12A-12C: winding
- 120: first electrical conductor
- 121: second electrical conductor
- 122: winding portion
- 123: first star point
- 124: second star point
- 13: inverter system
- 130A-130F: inverter unit
- 131: control unit
- 132A-132C: power electronics driver
- 133: sensor
- 134A, 134B: inverter
- 135: bandpass filter
- 136: switch
- 137: analyzer
- 138A, 138B: PWM generator
- 139: adder
- 2, 2': electric machine
- 20: rotor
- 21: stator
- 3: energy source
- 4: aircraft
- 40: propeller
- A: winding axis
- L: air gap
- N: north pole
- S: south pole
- U, V, W: phase
- Vc, PWMc: carrier signal
- Vref, PWMref: reference signal
- WS1, WS2: winding system

## Claims

1. An arrangement (1) for an electric machine (2, 2'), the arrangement (1) comprising:
- a first winding system (WS1) and a second winding system (WS2), wherein at least one electrical conductor (120) of the first winding system (WS1) and at least one electrical conductor (121) of the second winding system (WS2) are at least partially wound around a common winding axis (A) and alternate in a direction of the winding axis (A);
- an inverter system (13) with a first inverter (134A) for the first winding system (WS1) and a second inverter (134B) for the second winding system (WS2);
- a control unit (131) configured to provide reference signals (Vref, PWMref) to control the first and second inverters (134A, 134B) to provide an AC voltage to the respective winding system (WS1, WS2), wherein the control unit (131) is further configured to superimpose a carrier signal (Vc, PWMc) to the reference signal (Vref, PWMref) for the first inverter (134A); and
- a sensor (133) arranged at the second winding system (WS2) for sensing an electrical parameter with the second winding system (WS2),
wherein the control unit (131) is further configured to receive sensor signals from the sensor (133) and to detect a fault based on the sensor signals.

2. The arrangement (1) of claim 1, wherein the reference signals (Vref, PWMref) are voltage set points or PWM signals.

3. The arrangement (1) of claim 1 or 2, wherein the carrier signal (Vc, PWMc) has a frequency, the frequency being predetermined or adjustable during operation, in particular wherein the arrangement (1) is configured to rotate a rotor (20) around an axis of rotation with one or more adjustable rotational frequencies, wherein for each adjustable rotational frequency of the rotor (20) the frequency of the carrier signal (Vc, PWMc) is larger than the rotational frequency and/or the frequency of the carrier signal is greater than the maximum synchronous electrical frequency.

4. The arrangement (1) of claim 3 or 4, wherein each of the inverters (134A, 134B) comprises a plurality of switches (136) switched in accordance with the reference signals (Vref, PWMref) with one or more adjustable switching frequencies, wherein for each adjustable switching frequency the frequency of the carrier signal (Vc, PWMc) is smaller than the switching frequency.

5. The arrangement (1) in accordance with claim 4 and claim 5, wherein for each adjustable rotational frequency of the rotor (20) the frequency of the carrier signal (Vc, PWMc) is no integer multiple of the rotational frequency and wherein for each adjustable switching frequency the switching frequency is no integer multiple of the frequency of the carrier signal (Vc, PWMc) and/or no combination of swtiching frequency and synchronous frequency that would be expected or present in a PWM-fed operation.

6. The arrangement (1) of any of claims 3 to 6, wherein the control unit (131) comprises a bandpass filter (135) with a frequency range around the frequency of the carrier signal (Vc, PWMc).

7. The arrangement (1) of any of the preceding claims, wherein the carrier signal (Vc, PWMc) is a sinusoid or a square wave.

8. The arrangement (1) of any of the preceding claims, wherein the electrical parameter sensed by the sensor (133) is a voltage or an electrical current or both.

9. The arrangement (1) of any of the preceding claims, wherein the amplitude of the carrier signal (Vc, PWMc) is smaller than the amplitude of the reference signal (Vref, PWMref) for the first inverter (134A).

10. The arrangement (1) of any of the preceding claims, wherein the control unit (131) is configured to detect a fault based on the sensor signals by detecting a change of the sensor signals.

11. The arrangement (1) of any of the preceding claims, wherein the control unit (131) is configured to compare the sensor signals with one or more predetermined expected sensor signals, and to detect a fault based on the sensor signals by determining the difference between the sensor signals and the one or more expected sensor signals and by detecting whether the difference is above or below a given threshold.

12. The arrangement (1) of any of the preceding claims, wherein the first winding system (WS1) comprises three electrical conductors (120) connected with each other at a first star point (123) and the second winding system (WS2) comprises three electrical conductors (121) connected with each other at a second star point (124), wherein the first inverter (134A) provides one respective phase (U, V, W) to each of the three electrical conductors (120) of the first winding system (WS1) and the second inverter (134B) provides one respective phase (U, V, W) to each of the three electrical conductors (121) of the second winding system (WS2).

13. The arrangement (1) of any of the preceding claims, wherein the control unit (131) is configured to superimpose the carrier signal (Vc, PWMc) to the reference signal (Vref, PWMref) for the first inverter (134A) such that the carrier signal (Vc, PWMc) is transmitted from the first winding system (WS1) into the second winding system (WS2) by electromagnetic coupling, wherein the control unit (131) is further configured to detect a fault by detecting a shift in the measured sensor signals due to the fault.

14. An electric machine (2, 2'), comprising the arrangement (1) of any of the preceding claims, the arrangement (1) comprising a stator (21), wherein a rotor (20) is rotatably mounted at the stator (21).

15. An aircraft (4) comprising the electric machine (2, 2') of claim 14.
